# EUROPEAN PATENT APPLICATION

(11) **EP 4 510 356 A1**
(43) Date of publication of application: **19.02.2025**
(21) Application number: 22962453.1
(22) Date of filing: 21.10.2022
(51) Int. Cl.: H01M 50/449, H01M 50/40, H01M 4/13, H01M 10/058

(54) **BATTERY CELL, BATTERY AND ELECTRICAL DEVICE**

(71) Applicant: Contemporary Amperex Technology Co., Limited, Ningde, Fujian 352100 (CN)
(72) Inventor: DU, Xianglong, Ningde City, Fujian 352100 (CN)
(74) Representative: Kraus & Lederer PartGmbB
(86) International application number: PCT/CN2022/126713
(87) International publication number: WO 2024/082270

(57) **Abstract**

The present application discloses a battery cell, a battery, and an electrical apparatus. The battery cell includes a first electrode plate and a second electrode plate, wherein the first electrode plate and the second electrode plate are oppositely arranged, the first electrode plate or the second electrode plate has a thinned region, and an adsorbent (4) is provided at a corresponding position of the thinned region. The adsorbent (4) can fill a gap between the first electrode plate and the second electrode plate due to the presence of the thinned region, and can then absorb an electrolyte solution, so that normal lithium ion transport can be achieved between the first electrode plate and the second electrode plate, thereby avoiding the occurrence of purple spot or lithium plating phenomenon on the electrode plates, and effectively improving the cycling performance and safety performance of the battery.

## Description

### Technical Field

The present application relates to the field of batteries, and specifically relates to a battery cell, a battery, and an electrical apparatus.

### Background

A battery comprises a positive electrode plate, a negative electrode plate, a separator, and an electrolyte solution, wherein the separator is sandwiched between the positive electrode plate and the negative electrode plate; the positive electrode plate, the separator, and the negative electrode plate are wound together to form a battery cell; and the battery cell is placed in a case, into which the electrolyte solution is injected to provide the battery.

In a process of assembling batteries into a module, in order to effectively utilize space, the batteries are often placed lying down.

### Summary of the Invention

### Technical Problem

One of the objects of embodiments of the present application is to provide a battery cell, a battery, and an electrical apparatus.

### Solution to the Problem

### Technical Solution

The inventors of the present application found that cycle life of a battery will be reduced when the battery is placed lying down compared to that when the battery is placed upright. It is found after disassembling the battery that purple spots appear in the upper half of the battery that is placed lying down, and lithium plating phenomenon occurs in the lower half of the battery that is placed lying down. Through theoretical analysis and experimental validation, the inventors found that the main reason for the occurrence of purple spot and lithium plating phenomena is the problem that there is insufficient electrolyte solution in the thinned region of the electrode plates. In view of this problem, the present application provides a battery cell, a battery, and an electrical apparatus, and can alleviate the problem of reduced cycle life in a use process of the battery.

In a first aspect, the present application provides a battery cell, comprising: a first electrode plate and a second electrode plate, wherein the first electrode plate and the second electrode plate are oppositely arranged, the first electrode plate or the second electrode plate has a thinned region, and an adsorbent fills between a positive electrode plate and a negative electrode plate in the thinned region.

In technical solutions of embodiments of the present application, an adsorbent is provided between the positive electrode plate and the negative electrode plate. The adsorbent can fill a gap between the first electrode plate and the second electrode plate due to the presence of the thinned region, and can then absorb an electrolyte solution, so that normal lithium ion transport can be achieved between the first electrode plate and the second electrode plate, thereby avoiding the occurrence of purple spot or lithium plating phenomenon on the electrode plates, and effectively improving the cycling performance and safety performance of the battery.

In some embodiments, at a corresponding position of the thinned region, the adsorbent at least partially fills in the gap between the first electrode plate and the second electrode plate. The adsorbent fills in the gap between the first electrode plate and the second electrode plate, which can enable the connection between the first electrode plate and the second electrode plate, thereby allowing lithium ions to be transported between the first electrode plate and the second electrode plate, and is beneficial to alleviating the purple spot or lithium plating phenomenon on the electrode plates, thereby improving the cycling performance and safety performance of the battery.

In some embodiments, the width of the adsorbent at least covers the thinned region. The width of the adsorbent covers the width of the thinned region, which can ensure that the entire thinned region can fully contact with the electrolyte solution, is more conducive to the transport of lithium ions between the first electrode plate and the second electrode plate, and is more conducive to alleviating occurrence of purple spot or lithium plating phenomenon on the electrode plates, thereby improving the cycling performance and safety performance of the battery.

In some embodiments, the shape of the adsorbent matches the shape of the thinned region. In this way, the adsorbent can better contact with the first electrode plate and the second electrode plate, thereby promoting smooth transport of lithium ions.

In some embodiments, the first electrode plate has the thinned region, and the adsorbent is arranged in the thinned region of the first electrode plate; or the second electrode plate has the thinned region, and the adsorbent is arranged in the thinned region of the second electrode plate. The adsorbent is arranged in the thinned region of the electrode plates, which can better achieve the contact between the adsorbent and the electrode plates and the contact between the adsorbent and the separator, thereby ensuring the adsorption of the electrolyte solution, promoting the transport of lithium ions, and improving the cycling performance and safety performance of the battery.

In some embodiments, the first electrode plate has the thinned region, and the second electrode plate has the thinned region, the adsorbent comprises a first adsorbent and a second adsorbent, the first adsorbent is arranged in the thinned region of the first electrode plate, and the second adsorbent is arranged in the thinned region of the second electrode plate. Each of the first electrode plate and the second electrode plate has the thinned region. **In** this case, the adsorbent is provided in the thinned region of the first electrode plate and the thinned region of the second electrode plate respectively, which can better achieve the contact between the adsorbent and the electrode plates and the contact between the adsorbent and the separator, thereby ensuring the adsorption of the electrolyte solution, promoting the transport of lithium ions, and improving the cycling performance and safety performance of the battery.

**In** some embodiments, the battery cell comprises a separator, the separator is sandwiched between the first electrode plate and the second electrode plate, the adsorbent is arranged on the separator, and the adsorbent and the separator are integrally formed, or the adsorbent and the separator are separately formed. Integrated formation of the adsorbent and the separator can simplify the process, and improve the efficiency. Separated formation of the adsorbent and the separator can improve the controllability, allowing for more flexible selection of the separator and the adsorbent as required.

In some embodiments, the first electrode plate has the thinned region, and the second electrode plate has the thinned region, and the adsorbent is arranged on both sides of the separator. This can ensure the effective contact between the adsorbent and the separator and between the adsorbent the electrode plates, thereby promoting the transport of lithium ions.

In some embodiments, the adsorbent has micropores, and a pore size of the micropores is 0.05-800 um. If the micropores are too small, less electrolyte solution is stored; while if the micropores are too large, less electrolyte solution is adsorbed, which can weaken effective transport of lithium ions between the first electrode plate and the second electrode plate. In some embodiments, the pore size of the micropores is preferably 200-600 um, and is further preferably 300-400 um.

In some embodiments, when the adsorbent is attached to the thinned region of the first electrode plate or the thinned region of the second electrode plate, a porosity of the adsorbent is 35%-60%, and is preferably 40%-50%. When the adsorbent is attached to the separator or the adsorbent and the separator are integrally formed, the adsorbent and the separator form an integral assembly, a porosity of which is 35%-60%, and is preferably 40%-50%. If the porosity is too small, it can affect the amount of stored electrolyte solution; while if the porosity is too large, it can affect the amount of adsorbed electrolyte solution.

In some embodiments, the adsorbent comprises an adhesive tape or a coating. When the adsorbent is an adhesive tape, the adhesive tape can be attached to the electrode plates or the separator. When the adsorbent is a coating, a porous coating layer is coated on the electrode plates or the separator. When the adsorbent in the form of adhesive tape is used, the process is simpler, while when the adsorbent in the form of coating is used, various parameters of the adsorbent are more controllable.

In some embodiments, the first electrode plate is a positive electrode plate, and the second electrode plate is a negative electrode plate.

In a second aspect, the present application provides a battery, comprising the battery cell in the above embodiments.

In a third aspect, the present application provides an electrical apparatus, comprising the battery in the above embodiments, wherein the battery is configured to provide electric energy.

The above description merely provides an overview of the technical solutions of the present application. In order to more clearly understand the technical means of the present application, the present application may be implemented according to the content of the specification, and in order to make the above and other objectives, features, and advantages of the present application more obvious and understandable, detailed description of the present application is listed below.

### Description of Drawings

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the figures:
FIG. 1 is a schematic structural diagram of a battery in the prior art;
FIG. 2 is a schematic diagram of a cross-sectional structure of a battery in the prior art;
FIG. 3 is a schematic structural diagram of a battery cell of the battery shown in FIG. 2;
FIG. 4 is another schematic structural diagram of a battery cell of the battery shown in FIG. 2;
FIG. 5 is a schematic structural diagram of a battery cell in some embodiments of the present application;
FIG. 6 is a schematic structural diagram of a battery cell in some embodiments of the present application;
FIG. 7 is a schematic structural diagram of a battery cell in some embodiments of the present application;
FIG. 8 is a schematic structural diagram of a battery cell in some embodiments of the present application; and
FIG. 9 is a schematic structural diagram of a battery cell in some embodiments of the present application.

### Detailed Description

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "include/comprise" and "have" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the quantity, particular order, or primary and secondary relation of the technical features indicated. In the description of the embodiments of the present application, the "plurality" means two or more, unless otherwise explicitly and specifically defined.

Reference herein to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the description of the embodiments of the present application, the term "and/or" is merely an association relationship describing associated objects, and means that there may be three relationships, for example, A and/or B may mean three circumstances: only A exists, both A and B exist, and only B exists. In addition, the character "/" herein generally means that there is an "or" relationship between associated objects therebefore and thereafter.

In the description of the embodiments of the present application, the term "plurality" refers to more than two (including two). Similarly, "a plurality of groups" refers to more than two groups (including two groups), and "a plurality of sheets" refers to more than two sheets (including two sheets).

In the description of the embodiments of the present application, the directions or positional relationships indicated by the technical terms, such as "center," "longitudinal," "transverse," "length," "width," "thickness," "above," "below," "front," "back," "left," "right," "vertical," "horizontal," "top," "bottom," "inner," "outer," "clockwise," "counterclockwise," "axial," "radial," and "circumferential," are based on the directions or positional relationships shown in the drawings, are only provided to facilitate describing the embodiments of the present application and simplifying the description, rather than indicating or implying that the apparatus or element referred to must have a specific direction, or be configured and operated in a specific direction, and therefore cannot be construed as limiting the embodiments of the present application.

In the description of the embodiments of the present application, unless otherwise explicitly stipulated and defined, the technical term such as "mounting," "connected," "connecting," "fixing", or the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skills in the art, the specific meanings of the above terms in the embodiments of the present application may be understood based on specific circumstances.

Batteries are widely used in the fields, such as mobile phones, electric vehicles, and energy storage. Each of the batteries comprises a battery cell, the battery cell is packed in a case, into which an electrolyte solution is injected, and processes such as formation are performed to provide a rechargeable battery.

A lithium-ion battery comprises a positive electrode plate, a negative electrode plate, a separator located between the positive electrode plate and the negative electrode plate, and an electrolyte solution. Generally, the battery is placed upright, but in some special cases, the battery is placed lying down. The inventors noticed that when the battery is placed lying down, cycle life of the battery tends to be reduced with the charge-discharge process of the battery. By disassembling this battery, the inventors found occurrence of purple spot phenomenon on the anode plate (i.e., the negative electrode plate) located in the upper half of the battery, and occurrence of the lithium plating phenomenon on the anode plate located in the lower half of the battery.

The inventors of the present application found through research and analysis that because there is a thinned region on the edge of either electrode plate of the battery, there is a large gap between the positive electrode plate and the negative electrode plate in a region corresponding to the thinned region, and this gap is larger than a distance between the positive electrode plate and the negative electrode plate in a region corresponding to a non-thinned region. When the battery is placed lying down, the electrolyte situation remains in the lower part of the battery cell under the action of gravity, and is absent in some regions in the upper part of the battery cell, that is, normal lithium ion transport fails to be performed between the positive electrode plate and the negative electrode plate in this region.

The absence of the electrolyte solution in the thinned region causes a problem in the transport of lithium ions between the positive electrode plate and the negative electrode plate, and the lithium ions in the positive electrode plate cannot reach the negative electrode plate, thereby resulting in occurrence of purple spots on the anode plate in the upper half of the battery, and occurrence of the lithium plating phenomenon in the lower half of the anode plate.

In order to alleviate the problem of cycling performance reduction of the battery cell, the inventors of the present application found that the thinned region between the positive electrode plate and the negative electrode plate is filled with a material that can absorb the electrolyte. The material that absorbs the electrolyte fills the gap between the positive electrode plate and the negative electrode plate, allowing the electrolyte solution in the lower half of the battery to be penetrated into the upper half of the battery, and the electrolyte solution adsorbed by the material that absorbs the electrolyte can allow lithium ions to be smoothly transported between the positive electrode plate and the negative electrode plate, thereby alleviating or even avoiding the occurrence of purple spot phenomenon in the upper half of the anode plate and occurrence of the lithium plating phenomenon in the lower half of the anode plate. The battery cell of the present application can effectively solve the occurrence of purple spot and lithium plating phenomena caused by the interruption of the lithium ion transport path due to the presence of the thinned region on the edge of either electrode plate when the battery is placed lying down, thereby improving the cycling performance and safety performance of the battery.

The thinned region mentioned in the present application is formed by: when an active material is coated on the surface of either electrode plate, on both sides of the length direction of the active material layer, that is, on the edge of either side of the width of the electrode plate, the active material coating layer will present a slope-like structure, and the height of the coating layer will decrease. The region of the coating layer with reduced height is defined as the thinned region in the present application.

The battery cell disclosed in the embodiments of the present application can be used in, but not limited to, an electrical apparatus, such as a mobile phone, a computer, a vehicle, a ship, or an aircraft. The use of the battery cell, the battery, and the electrical apparatus disclosed in the present application is conductive to alleviating the problem of occurrence of purple spots and lithium plating in the battery cell, and improving the cycling performance of the battery.

An embodiment of the present application provides an electrical apparatus using a battery as a power source. The electrical apparatus may be, but is not limited to, a mobile phone, a tablet computer, a notebook computer, an electric toy, an electric tool, a battery car, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

For ease of description, the following embodiments are illustrated by taking a battery in an embodiment of the present application as an example.

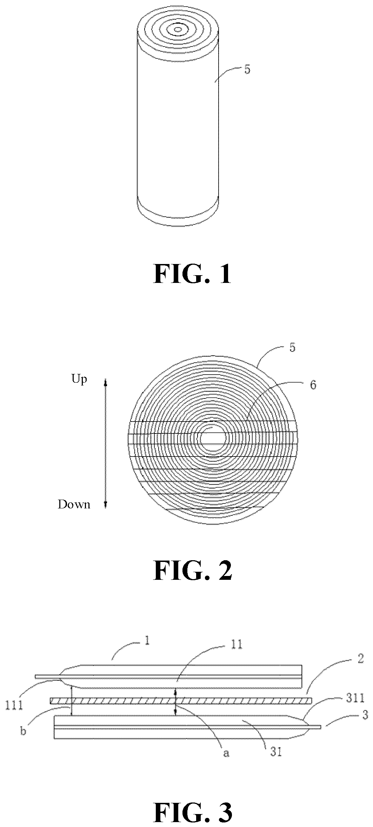

In order to more clearly illustrate the embodiments of the present application, the technical problems to be solved in the present application are first described with reference to the drawings. Referring to FIGS. 1 and 2, FIG.1 is a three-dimensional view of a battery in an upright state, and FIG. 2 is a cross-sectional view of a battery in a lying-down state. The battery comprises a case 5 and a battery cell and an electrolyte solution 6 located inside the case. As shown in FIG. 2, when the technical solutions of the present application are not used, when the battery is placed lying down, most of the electrolyte solution remains in the lower half of the battery, and many regions in the upper half of the battery are not immersed in the electrolyte solution. It should be noted that either of the "upper half" or the "lower half" mentioned above is not a concept of a strict half, but a relative concept. For example, when a liquid level of the electrolyte solution is three fourths of the height of the battery placed lying down, the lower three fourths is the lower half and the upper one fourth is the upper half.

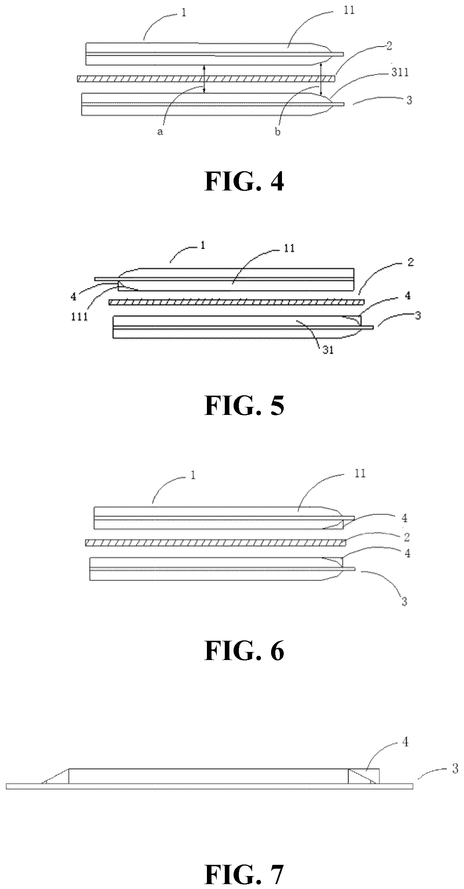

As shown in FIGS. 3 and 4, the battery cell comprises a positive electrode plate 1, a separator 2, and a negative electrode plate 3, the positive electrode plate 1 is provided with a positive electrode active material layer 11, and the negative electrode plate 3 is provided with a negative electrode active material layer 31. The positive electrode active material layer 11 is provided with a positive electrode thinned region 111, and the negative electrode active material layer 31 is provided with a negative electrode thinned region 311. In some embodiments of the present application, as shown in FIG. 3, the positive electrode thinned region 111 and the negative electrode thinned region 311 are located on both sides of the electrode plate respectively, that is, the positive electrode thinned region 111 and the negative electrode thinned region 311 are non-oppositely arranged. In some embodiments of the present application, as shown in FIG. 4, the positive electrode thinned region 111 and the negative electrode thinned region 311 are both located on a same side of the electrode plates, that is, the positive electrode thinned region 111 and the negative electrode thinned region 311 are oppositely arranged. As shown in FIGS. 3 and 4, in the non-thinned region, a gap between the positive electrode plate 1 and the negative electrode plate is a, and in the thinned region, a gap between the positive electrode plate 1 and the negative electrode plate 3 is b, wherein b>a. With reference to FIG. 2, the upper half of the battery is not immersed in the electrolyte solution, and in a corresponding region of the thinned region, a gap between the positive electrode plate 1 and the negative electrode plate 3 is too large to be filled with the electrolyte solution, thereby resulting in failure to transport lithium ions between the positive electrode plate 1 and the negative electrode plate 3, and occurrence of purple spot and lithium plating phenomena on the electrode plates. In order to solve this problem, in the present application, an adsorbent 4 is arranged between the positive electrode plate 1 and the negative electrode plate 3 corresponding to the thinned region, wherein the adsorbent 4 can adsorb the electrolyte, thus achieving normal lithium ion transport between the positive electrode plate 1 and the negative electrode plate 3, avoiding the occurrence of purple spot phenomenon on the electrode plates, and improving the cycling performance of the battery.

In some embodiments of the present application, as shown in FIGS. 5 and 6, the adsorbent 4 is arranged on the electrode plates. Specifically, referring to FIGS. 3 and 5, the positive electrode thinned region 111 and the negative electrode thinned region 311 are located on different sides of the electrode plates, the positive electrode thinned region 111 corresponds to a negative electrode non-thinned region, and the negative electrode thinned region 311 corresponds to a positive electrode non-thinned region. In this case, the adsorbent 4 is arranged in the negative electrode thinned region 311, and further, the adsorbent 4 is also arranged in the positive electrode thinned region 111. The adsorbent 4 is located between the positive electrode plate 1 and the negative electrode plate 3, and fills the gap between the positive electrode plate 1 and the negative electrode plate 3. The adsorbent 4 can adsorb the electrolyte solution, and enables normal lithium ion transport between the positive electrode plate 1 and the negative electrode plate 3, thereby avoiding the occurrence of purple spot phenomenon on the electrode plates, and improving the cycling performance of the battery. In another embodiment, referring to FIGS. 4 and 6, the positive electrode thinned region 111 and the negative electrode thinned region 311 are located on the same side of the electrode plates. In this case, the positive electrode thinned region 111 corresponds to the negative electrode thinned region 311. The positive electrode thinned region 111 and the negative electrode thinned region 311 are provided with the adsorbent 4 respectively, and the adsorbent 4 is located on the same side of the electrode plates. The adsorbent 4 is arranged in the positive electrode thinned region and the negative electrode thinned region respectively, jointly fills the gap formed by the thinned regions of the positive electrode plate and the negative electrode plate, adsorbs and stores the electrolyte solution, and forms a lithium ion transport channel.

In some embodiments of the present application, the shape of the adsorbent 4 is not limited, as long as the adsorbent 4 can play a role in filling the gap between the positive electrode plate 1 and the negative electrode plate 3. In the battery cell structure shown in FIG. 4, the adsorbent 4 may also be arranged only in the thinned region of the positive electrode plate or only in the thinned region of the negative electrode plate. In this case, a maximum thickness of the adsorbent 4 is preferably larger than a thickness of the active material layer of either electrode plate, so that the adsorbent can more fully fill the gap between the positive electrode plate 1 and the negative electrode plate 3, allowing for smooth transport of lithium ions.

In an embodiment of the present application, as shown in FIG. 6, the shape of the adsorbent 4 is consistent with the shape of the thinned region of the active material layer. In this way, the adsorbent 4 can better contact with the positive electrode plate 1 and the negative electrode plate 3, to promote smooth transport of lithium ions. The shape of the adsorbent 4 is consistent with the shape of the thinned region of the active material layer, which means that a surface contour line of a side of the adsorbent 4 is consistent with a surface contour line of the thinned region. In this way, when the adsorbent is attached to the thinned region of the positive electrode plate or the thinned region of the negative electrode plate, or when the separator is arranged corresponding to the thinned region, the adsorbent can fully fill the thinned region, so that the gap between the positive electrode plate and the negative electrode plate can be effectively filled to form a complete transport channel of lithium ions, thereby promoting the transport of lithium ions to a greater extent. When the adsorbent is attached to the thinned region, the surface on a side of the adsorbent 4 away from the active material layer is flush with the surface of the active material layer, and the adsorbent can form a coordinated combination with a non-thinned region of the active material layer, that is, the active material and the adsorbent in the thinned region jointly form a structure similar to the active material layer in the non-thinned region. Both the positive electrode plate and the negative electrode plate are arranged in this way, which can better achieve mutual contact between the positive electrode plate, the adsorbent of the positive electrode plate, the adsorbent of the negative electrode plate, and the negative electrode plate, thereby ensuring efficient transport of lithium ions.

In an embodiment of the present application, as shown in FIG. 7, the width of the adsorbent 4is preferably larger than the width of the thinned region, thus ensuring the coverage of the thinned region by the adsorbent 4, and preventing incomplete coverage of the thinned region by the adsorbent caused by process errors from resulting in failure to achieve effective transport of lithium ions in partial thinned region.

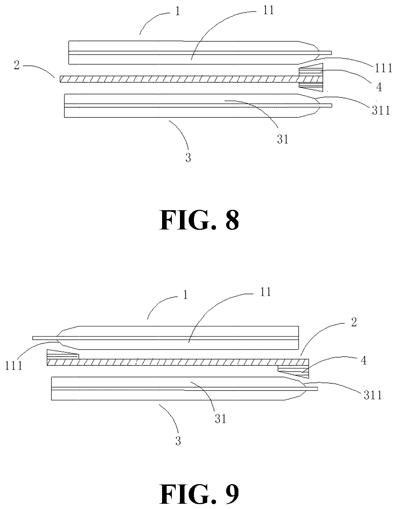

In an embodiment of the present application, as shown in FIGS. 8 and 9, the adsorbent 4 may be arranged on the separator 2. In an embodiment, as shown in FIG. 8, the positive electrode thinned region 111 and the negative electrode thinned region 311 are arranged correspondingly. In this case, preferably, the adsorbent 4 is arranged on both sides of the separator 2, and the adsorbent 4 arranged on both sides of the separator can fill the positive electrode thinned region 111 and the negative electrode thinned region 311 accordingly, thus achieving the transport of lithium ions between the positive electrode plate 1 and the negative electrode plate 3. In an embodiment, as shown in FIG. 9, the positive electrode thinned region 111 and the negative electrode thinned region 311 are arranged on different sides of the electrode plates respectively. In this case, the adsorbent 4 is arranged in a region of the separator 2 corresponding to the negative electrode thinned region 311. Further, the adsorbent 4 is provided in a region of the separator 2 corresponding to the positive electrode thinned region 111. Similar to the embodiments shown in FIGS. 4-7, preferably, an outer contour surface of the adsorbent 4 matches the surface shape of the thinned region, so that the filler 4 can more fully fill the positive electrode plate 1 and the negative electrode plate 3, thus achieving effective transport of lithium ions. Preferably, the width of the adsorbent 4 is larger than the width of the thinned region, thus ensuring the coverage of the thinned region by the adsorbent 4, and avoiding incomplete coverage of the thinned region by the adsorbent caused by process errors. When the width of the adsorbent 4 is larger than the width of the thinned region, the edge of the adsorbent 4 is beyond the edge of the thinned region. In an embodiment of the present application, the adsorbent 4 and the separator 2 are integrally formed, which can save the step of attaching or coating the filler, and can also avoid problems such as falling and offsetting of the adsorbent 4.

In some embodiments of the present application, the adsorbent 4 has micropores, so that the adsorbent 4 adsorbs and stores the electrolyte solution through the micropores. The radius of the micropores of the adsorbent 4 is 0.05 um-800 um. The micropores of this size can enhance the ability of the adsorbent 4 to adsorb the electrolyte solution and transport lithium ions. A too small pore size can cause the adsorbent to store less electrolyte solution, which can reduce the transport efficiency of lithium ions, while a too large pore size can cause the adsorbent to adsorb less electrolyte solution, which can also have a negative impact on the transport of lithium ions. Preferably, the pore size of the micropores is 200-600 um, and is further preferably 300-400 um.

In some embodiments of the present application, when the adsorbent 4 is attached to the thinned region of the positive electrode plate or the thinned region of the negative electrode plate, the porosity of the adsorbent 4 is 35%-60%, and is preferably 40%-50%. When the adsorbent 4 is attached to the separator or the adsorbent and the separator are integrally formed, the porosity of the integral assembly of the adsorbent 4 and the separator is 35%-60%, and is preferably 40%-50%. A too small porosity can affect the amount of stored electrolyte solution, and a too large porosity can affect the amount of adsorbed electrolyte solution. The adsorbent 4 needs to be selected based on consideration of both the adsorption capacity and the storage capacity of the adsorbent for the electrolyte solution. When both the adsorption capacity and the storage capacity are relatively large, the filling of the electrolyte solution between the positive electrode plate and the negative electrode plate can be more effectively achieved, thereby achieving effective transport of lithium ions.

In some embodiments of the present application, the form of the adsorbent 4 includes an adhesive layer, a coating layer, etc. When the adsorbent 4 is an adhesive layer, the adhesive layer is attached to the positive electrode thinned region 111 or the negative electrode thinned region 311 or the separator 2; and when the adsorbent 4 is a coating layer, the coating layer is coated on the positive electrode thinned region 111 or the negative electrode thinned region 311 or the separator 2. When the form of adhesive layer is used, a material that satisfies the adsorbent performance can be directly purchased. In a preparation process of the battery cell, the adhesive layer is attached to a corresponding position; and when the form of coating layer is used, the thickness, porosity, material, and the like of the coating layer can be regulated as required, which can achieve fine control of the adsorbent.

In an embodiment of the present application, a battery is provided, comprising the battery cell in the above embodiments. It should be noted that the battery includes the concepts, such as a battery cell, a battery module, and a battery pack.

In another embodiment of the present application, an electrical apparatus is provided, comprising the battery in the above embodiments.

Finally, it should be noted that: the above embodiments are merely used to illustrate the technical solutions of the present application, instead of imposing any limitation on the present application. Although the present application has been described in detail with reference to the above embodiments, those with ordinary skills in the art should understand that: the technical solutions disclosed in the above embodiments may be modified, or a part or all of the technical features thereof may be replaced equivalently. These modifications and replacements are not intended to make the essence of corresponding technical solutions depart from the scope of the technical solutions of the embodiments of the present application, and should be encompassed within the scope of the claims and specification of the present application. In particular, the technical features mentioned in the various embodiments can be combined in any manner as long as there is no structural conflict. The present application is not limited to the particular embodiments disclosed herein, but includes all technical solutions falling within the scope of the claims.

## Claims

1. A battery cell, comprising:
a first electrode plate; and
a second electrode plate;
wherein the first electrode plate and the second electrode plate are oppositely arranged, the first electrode plate or the second electrode plate has a thinned region, and an adsorbent fills between a positive electrode plate and a negative electrode plate in the thinned region.

2. The battery cell according to claim 1, wherein a width of the adsorbent at least covers the thinned region.

3. The battery cell according to claim 1, wherein a shape of the adsorbent matches a shape of the thinned region.

4. The battery cell according to any one of claims 1 to 3, wherein the first electrode plate has the thinned region, the adsorbent is arranged in the thinned region of the first electrode plate; or the second electrode plate has the thinned region, and the adsorbent is arranged in the thinned region of the second electrode plate.

5. The battery cell according to claim 4, wherein the first electrode plate has the thinned region, the second electrode plate has the thinned region, the adsorbent comprises a first adsorbent and a second adsorbent, the first adsorbent is arranged in the thinned region of the first electrode plate, and the second adsorbent is arranged in the thinned region of the second electrode plate.

6. The battery cell according to any one of claims 1 to 3, wherein the battery cell comprises a separator, the separator is sandwiched between the first electrode plate and the second electrode plate, and the adsorbent is arranged on the separator; and
the adsorbent and the separator are integrally formed, or the adsorbent and the separator are separately formed.

7. The battery cell according to claim 6, wherein the first electrode plate has the thinned region, the second electrode plate has the thinned region, and the adsorbent is arranged on both sides of the separator.

8. The battery cell according to any one of claims 1 to 3, wherein the adsorbent has micropores, and a pore size of the micropores is 0.05-800 um.

9. The battery cell according to claim 8, wherein the pore size of the micropores is 200-600 um.

10. The battery cell according to claim 9, wherein the pore size of the micropores is 300-400 um.

11. The battery cell according to claim 4, wherein a porosity of the adsorbent is 35%-60%.

12. The battery cell according to claim 11, wherein the porosity of the adsorbent is 40%-50%.

13. The battery cell according to claim 6, wherein the adsorbent and the separator are integrally formed, and a porosity of the adsorbent and the separator is 35%-60%.

14. The battery cell according to claim 13, wherein the porosity of the adsorbent and the separator is 40%-50%.

15. The battery cell according to any one of claims 1 to 3, wherein the adsorbent comprises an adhesive tape or a coating.

16. The battery cell according to any one of claims 1 to 3, wherein the first electrode plate is a positive electrode plate, and the second electrode plate is a negative electrode plate.

17. A battery, comprising the battery cell according to any one of claims 1-16.

18. An electrical apparatus, comprising the battery according to claim 17.
